# EUROPEAN PATENT SPECIFICATION

(11) **EP 1 304 491 B1**
(45) Date of publication and mention of the grant of the patent: **02.11.2005**
(21) Application number: 02023190.8
(22) Date of filing: 16.10.2002
(51) Int. Cl.: F16C 1/22, F16D 13/75

(54) **Electrically actuated device for automatically adjusting travel and taking up play for a remote control cable in a vehicle**
Elektrisch betätigte Vorrichtung zum selbsttätigen Laufeinstellen und Spielausgleich für ein Zugseil in einem Fahrzeug
Dispositif à commande électrique de calage automatique de la course et rattrapage automatique de jeu d'un câble de commande à distance dans un véhicule

(30) Priority: 17.10.2001 IT TO20010986
(43) Date of publication of application: 23.04.2003
(73) Proprietor: Sila Holding Industriale S.p.A., 10042 Nichelino(Torino) (IT)
(72) Inventor: Gardiol, Marco, 10060 San Secondo Di Pinerolo, (Torino) (IT); Priotti, Claudio, 10061 Cavour, (Torino) (IT); Melis, Salvatore, 10098 Rivoli (Torino) (IT)
(74) Representative: Rondano, Davide

(56) References cited:
- EP-A- 0 556 064
- EP-A- 1 074 451
- DE-A- 19 800 858
- US-A- 4 987 793
- US-A- 5 117 958
- US-A- 5 167 166
- US-A- 5 884 433

## Description

The present invention relates to an automatic device for adjusting travel and taking up play and wear for a unit of a motor vehicle, such as a clutch or brake unit, operable by a remote-control member, by means of a flexible-cable transmission, as specified in the preamble to Claim 1.

In the following description, reference will be made, by way of example, to the use of the device in a flexible-cable transmission for operating a motorcar clutch. This application should not, however, be understood as limiting of the scope of the invention since the device may be used for any unit which is arranged to be operated, by means of a flexible transmission, by a control member situated in a position remote from the unit, not only in a motorcar but also, for example, in a motorcycle.

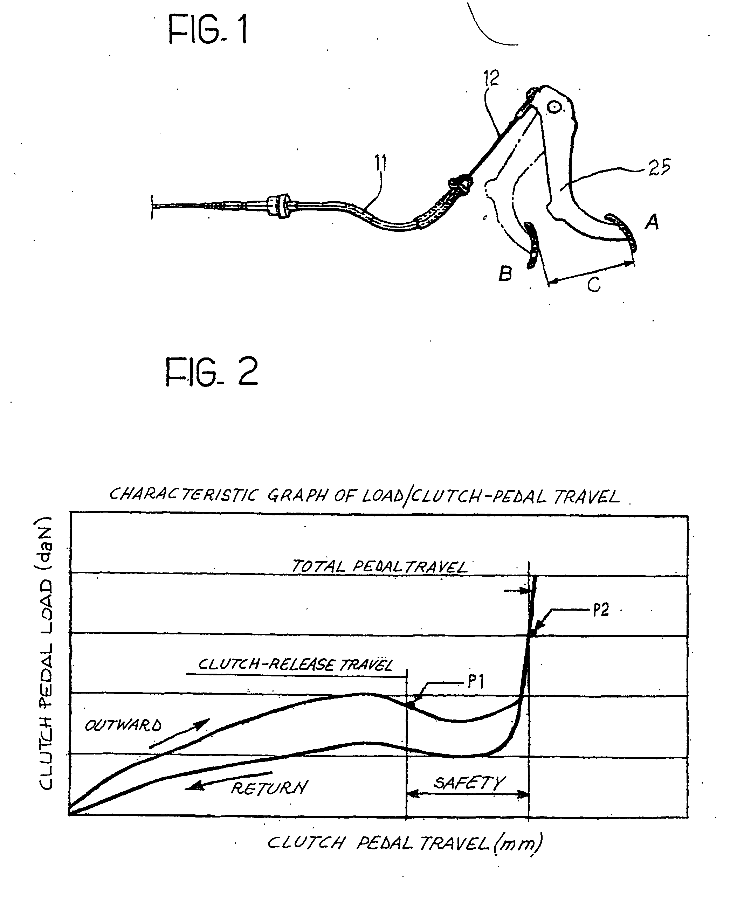

In motorcars with manual gearboxes, the clutch is generally operated by a pedal control of the type shown in Figure 1 of the appended drawings, in which the release position and the travel-limit position of a pedal 25 are indicated A and B, respectively. The controls imparted by the driver of the vehicle to the pedal 25 are transmitted to the clutch (not shown) by means of a flexible-cable transmission constituted by a cable 12 slidable inside a sheath 11.

For correct operation of the clutch, the total travel of the pedal 25 (indicated c in Figure 1) must allow the clutch disk to be released completely so that the engine shaft is rotationally disconnected from the input shaft of the gearbox.

The use of a flexible cable of fixed length does not enable to satisfy this requirement since both the tolerance chain along the transmission from the pedal to the clutch, and the play and the wear in the transmission mechanisms, cause the travel of the pedal to vary over time, thus necessitating successive operations for the setting and adjustment of the travel. In fact, if the travel of the pedal is insufficient, the clutch disk is prevented from being completely released, resulting in difficulty in shifting and reduction in the life of the synchronization devices of the gearbox. If, on the other hand, the pedal travel is excessive, the clutch is stressed in an anomalous manner, resulting in reduction in its reliability.

To ensure the correct value of the pedal travel over time is therefore a fundamental requirement which cannot, however, be satisfied by manual adjustment, since only a skilled user is able to recognize the operating anomalies resulting from changes in the travel and thus to make use of repair facilities in order to have the adjustment performed in good time.

Figure 2 shows a characteristic graph for a clutch pedal giving the load on the pedal as a function of the pedal travel. Two characteristic points, indicated P1 and P2, identify the disengagement-travel value which corresponds to the complete release of the clutch disk, and the total-travel value, respectively.

The disengagement travel depends substantially on the tolerance chain of the components of the control transmission. The total travel, on the other hand, depends basically on the adjustment of the control, so that, if an infinitely precise adjustment method were available, it would therefore be equal for all cars produced. In reality, the total travel is also subject to variations due to the following factors:
- the accuracy of the method of adjusting the control at the time of manufacture of the vehicle,
- the degree of settling of the control, which leads to a lowering of the pedal and hence to a reduction in the travel, and
- the degree of wear of the clutch disk, which leads to a raising of the pedal and hence to an increase in the travel.

These latter two phenomena show different trends over time and do not therefore tend to cancel one another out. The characteristic curve of a clutch is thus intrinsically variable from one vehicle to another and this variability cannot be eliminated by the use of a manual-adjustment control system.

Moreover, to enable the clutch to be disengaged, it is necessary to ensure that the value of the total travel of the pedal is always greater than the value of the disengagement travel so that the difference between these two values (defined as the safety value) is positive, and preferably greater than a given safety limit value.

In the light of the foregoing, the need for an automatic device for adjusting travel in a flexible-cable transmission for operating a unit of a motor vehicle will be appreciated. A device of this type is described in European patent application EP-A-0 556 064 from which Figure 3 of the appended drawings is extracted.

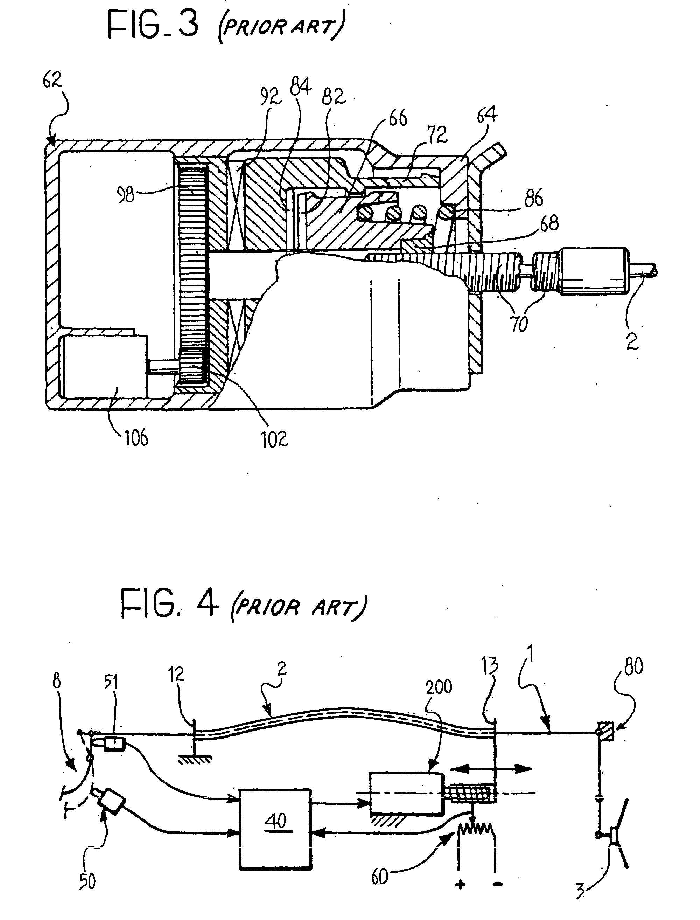

With reference to Figure 3, an adjustment device 62, advantageously usable in the flexible-cable transmission for operating a motorcar parking brake, comprises substantially:
an abutment member 64 cooperating with the brake lever (not shown),
a nut 66 having a ring of radial teeth 82 and provided with a threaded insert 68, the threaded end of a sheath 70 in which a flexible cable 2 is slidable being fitted in the threaded insert 68,
a sleeve 72 interposed radially between the member 64 and the nut 66 and having a ring of radial teeth 84 which can mesh with the teeth 82 of the nut 66, but which are normally not engaged therewith,
a spring 86 interposed radially between the member 64 and the nut 66, and
an actuator unit which can set in rotation the sleeve 72 by means of an electric motor 106 and a pinion 102 meshing with an internal gear 98, which in turn is provided with a ring of radial teeth 94 permanently meshed with a ring of radial teeth 92 of the sleeve 72.

As a result of the wear of the brake pad, the spring 86 tends to extend, causing the radial teeth 82 of the nut 66 to mesh with the radial teeth 84 of the sleeve 72. When the sleeve 72 is set in rotation by the actuator unit, it therefore brings with it the nut 66 and the insert 68, which rotates, moving axially along the end portion 70 of the sheath (which is prevented from rotating) until the radial teeth 82 and 84 are disconnected when the correct distance between the nut 66 and the end member 64 has been reached.

A disadvantage of a device of this type is the fact that it enables the travel to be adjusted in only one direction to compensate solely for the effect of wear. Moreover, there is no control system which can monitor the adjustment.

An automatic device for adjusting travel in a flexible-cable transmission is also known from United States patent US 5,117,958, from which Figure 4 of the appended drawings is extracted.

With reference to Figure 4, a flexible-cable transmission for operating a unit 3 (such as, in particular, a clutch) comprises a flexible cable 1 which, for part of its length, is arranged slidably in a sheath 2 having a first fixed end 12 and a second end 13 movable axially in both directions between two limit positions. Translation of the end 13 of the sheath 2 is brought about by an actuator 200 under the control of a computer 40. The transmission control makes use of two position sensors 50 and 51 for detecting the position of the clutch pedal 8, of a position sensor 60 for detecting the position of the end 13 of the sheath 2, and of a force sensor 80 for detecting the tensile force in the flexible cable 1. When, in conditions in which the pedal 8 is not depressed, the force sensor 80 detects a residual tensile force in the cable 1, clearly due to wear of the clutch disk, the actuator 200 brings about movement of the end 13 of the sheath, under the control of the computer 40, until this residual force is cancelled out.

However, an adjustment device of this type is complex and expensive since it uses a large number of sensors including, in particular, a force sensor.

The object of the present invention is to provide an automatic device for adjusting travel and taking up play and wear for a flexible-cable transmission which can transmit to a unit of a motor vehicle, such as a clutch unit or a braking unit, the controls imparted by the driver by means of a remote-control member, which device can eliminate the disadvantages of the prior art discussed above.

In particular, the device should be able to perform the following functions:
a) in rest conditions:
   - to assure the correct release position of the remote-control member (for the operation of a motorcar clutch, this position corresponds to the upper travel limit of the pedal), automatically compensating for the effects of play and/or wear, and
   - to assure the application of a constant and predetermined load both to the remote-control member (the pedal) and to the unit to be operated (the clutch), and
b) during the operation of the remote-control member:
   - to connect the remote-control member and the operating member within the unit to be operated in a manner such that the working travels of these members are proportional to one another.

The invention also proposes to provide a device which is easy to manufacture and to fit, which has a compact structure, and which requires a minimal number of sensors, eliminating, in particular, the need to use position sensors on the pedal or force sensors on the flexible cable.

These and other objects are achieved in full according to the invention by means of an automatic adjustment device having the characteristics specified in the characterizing part of independent Claims 1 and 2 which define respective preferred embodiments of the invention.

A first embodiment provides for the mounting of the automatic adjustment device on the sheath in which the flexible cable slides. A second preferred embodiment, on the other hand, provides for the mounting of the device directly on the flexible cable, preferably in the vicinity of the remote-control member or in the vicinity of the operating member within the unit to be operated.

A detailed description of the invention, relating to its use in a flexible-cable transmission for operating a motorcar clutch unit, is given below with reference to the appended drawings, in which:
- Figure 1 is a schematic view of a pedal-control member, shown in two alternative operating positions, for a motorcar clutch,
- Figure 2 is a graph giving the curve of the load detected on the clutch pedal as a function of the travel of the pedal during an operating cycle,
- Figure 3 is an axial section through an adjustment device of the prior art,
- Figure 4 is a schematic view of a flexible-cable transmission provided with an automatic adjustment device of the prior art,
- Figure 5 is a partially-sectioned, perspective view of a first embodiment of an automatic adjustment device according to the invention,
- Figure 6 shows a portion of the device of Figure 5 in detail,
- Figure 7 shows the actuator unit of the device of Figure 5 in detail,
- Figure 8 is a partially-sectioned perspective view of a second embodiment of a device according to the invention,
- Figure 9 shows two possible positions for the mounting of the device of Figure 8 in the vicinity of the clutch unit and in the vicinity of the clutch pedal, respectively, and
- Figure 10 shows schematically the mounting of a device according to the invention in the vicinity of a motorcycle clutch lever.

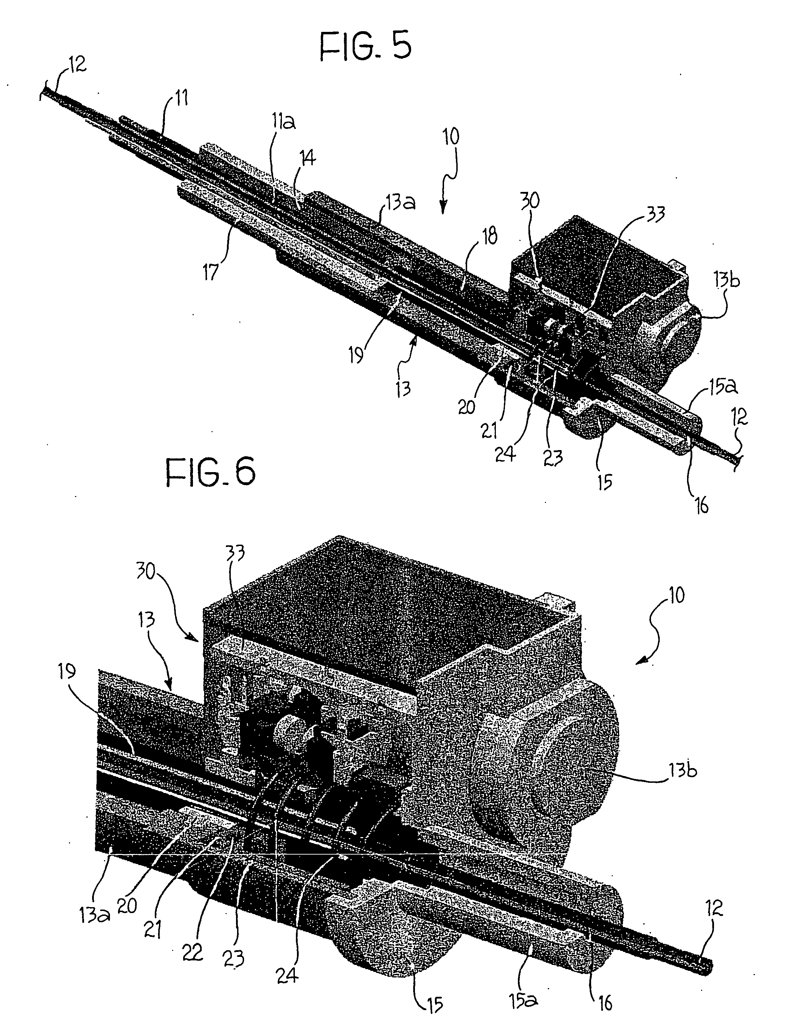

With reference now initially to Figure 5, in a flexible-cable transmission of the type comprising a sheath 11 in which a flexible cable 12 is slidable in order to transmit to an operating lever 26a of a motorcar clutch 26 the controls imparted by the driver of the motorcar by means of a pedal 25, an automatic adjustment device, generally indicated 10, is arranged, according to a first embodiment of the invention, to cooperate with the sheath 11.

The device 10 comprises, first of all, an outer casing 13 having a first essentially cylindrical, tubular portion 13a through the entire length of which the flexible cable 12 extends, and a second portion 13b disposed adjacent to the first and having a suitable, substantially parallelepipedal shape, for housing an actuator unit 30 (described further below).

An axial face of the tubular portion 13a has an opening 14 through which an end portion 11a of the sheath 11 can pass. At the axially opposite end, the portion 13a is closed by an abutment element 15 in the form of a cover (Figure 6). The abutment element 15 is provided with a cylindrical, tubular appendage 15a which is coaxial with the portion 13a and in which there is provided a hole 16 through which the cable 12 can pass.

According to this embodiment, the device 10 co-operates, at one end, with the sheath 11 in the region of the opening 14 and, at the axially opposite end, with a reaction restraint provided by a fixed portion of the vehicle, reacting on the appendage 15a of the abutment element 15. This reaction restraint may also be provided by another end of the sheath if the device 10 is mounted in the flexible transmission in an intermediate position between the pedal 25 and the clutch 26.

The flexible cable 12 passes through the tubular portion 13a throughout the length thereof, whereas the sheath 11 enters only part of the portion 13a, through the opening 14. The end portion 11a of the sheath 11 in the region of the opening 14 is locked in a coaxial, cylindrical cavity of a guide sleeve 17 which is partially housed so as to be slidable axially in an internal cylindrical cavity 18 of the portion 13a.

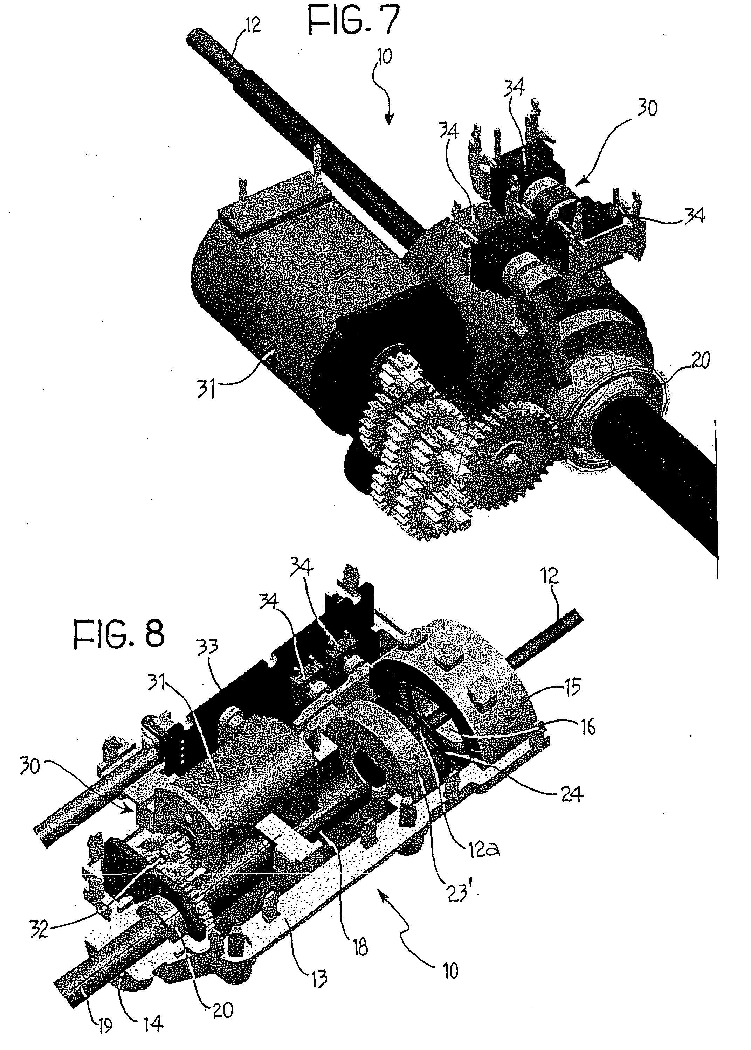

A screw 19 having a coaxial, cylindrical cavity through which the flexible cable 12 passes, is disposed in the cylindrical cavity 18 of the portion 13a, in abutment against the guide sleeve 17. The screw 19, which is prevented from rotating, can be moved axially in the cavity 18 as a result of the rotation of a nut screw 20 (Figures 6 and 7) the threaded internal profile of which meshes permanently with the thread of the screw 19.

The following components are arranged in order, in abutment with one another axially, between the nut screw 20 and the abutment element 15:
a tubular slider 21 with a radial flange 21a,
a shock-absorber ring 22 housed in an annular seat of the flange 21a of the slider 21, and
an axially movable cup 23 inside which a compression spring 24, acting between the cup 23 and the abutment element 15, is housed.

The spring 24 thus urges, at one end, against the abutment element 15 which, as stated above, may be either clamped to a fixed portion of the motor vehicle or fixed to the end of a second portion of sheath. At the axially opposite end, the spring 24 acts on the assembly constituted by the cup 23, the shock-absorber ring 22, the slider 21, the nut screw 20, the screw 19, the guide sleeve 17, and the end portion 11a of the sheath 11.

The spring 24 has the function of keeping the flexible-cable transmission system in equilibrium by reacting resiliently to the compression force which the sheath 11 exerts on the abutment element 15 via the various components interposed between its end portion 11a and the cup 23, in response to the tensile force in the flexible cable 12. The elastic characteristics of the spring 24 are set so as to assure a given preloading force on the clutch disk in rest conditions, that is, when no pressure is exerted on the clutch pedal.

The portion 13b of the casing 13 houses the actuator unit 30 which, as will be explained further below, is arranged to move the end portion 11a of the sheath 11 axially by means of the system comprising the screw 19 and the nut screw 20, so as to compensate for the above-described effects of settling and wear.

With reference now to Figures 6 and 7, the actuator unit 30 comprises an electric motor 31 which can set in rotation the nut screw 20, preferably by means of a reduction-gear unit 32. An electronic control unit 33 (Figure 6) is arranged to receive as inputs, from one or more position sensors 34, signals indicative of the position of the cup 23, and hence of the deformation of the spring 24, and to power the electric motor 31 in dependence on these signals.

The way in which the automatic adjustment device of the present invention is capable of compensating for the effects of settling and wear will now be described.

The consequence of settling in the control mechanism of the clutch unit is a lengthening of the flexible cable 12. In order to keep the system in equilibrium, the spring 24 consequently also lengthens and, by pushing against the various components interposed between the cup 23 and the guide sleeve 17, moves the end portion 11a of the sheath 11 axially towards the outside of the device. The movement of the cup 23 is detected by the position sensors 34 which transmit a corresponding signal to the electronic control unit 33 of the actuator unit 30, which powers the electric motor 31 in order to set in rotation the nut screw 20. This rotation is controlled by the electronic control unit 33 in a manner such as to move the screw 19, and hence the sheath portion 11a (restrained on the guide sleeve 17), towards the outside of the device until the flexible transmission is brought back into equilibrium with the spring 24 in the original preloading position.

The effect of wear of the clutch disk, on the other hand, increases the tensile force in the flexible cable 12. To keep the system in equilibrium, the spring 24 therefore has to be compressed, thus moving the end portion 11a of the sheath 11 towards the inside of the device. In exactly the same way as described above, the disturbance of the state of equilibrium of the system is noticed by the electronic control unit 33 by detection of the movement of the cup 23 by the position sensors 34. In this case, however, the electric motor 31 is powered by the control unit 33 so as to move the sheath portion 11a towards the inside of the device.

To prevent the adjustment device from operating when the change in the tensile force in the flexible cable 12 is due not to settling or to wear, but to the operation of the clutch pedal by the driver of the vehicle, according to a further aspect of the invention, the electronic control unit 33 is arranged to inhibit the operation of the device when the change in the length of the spring 24, either in the lengthening direction (settling) or in the shortening direction (wear), is greater than a given limit value for the intervention of the device.

If the spring 24 is shortened by more than this limit value as a result of the fact that the driver is depressing the clutch pedal, and the flexible cable 12 is thus subjected to a tensile force greater than that which would result from wear of the clutch disk, the control unit 33 therefore detects this condition by means of the sensors 34 and consequently prevents the electric motor 31 from operating. The adjustment device thus remains inactive, acting as a rigid body which does not cause the length of the flexible transmission to change.

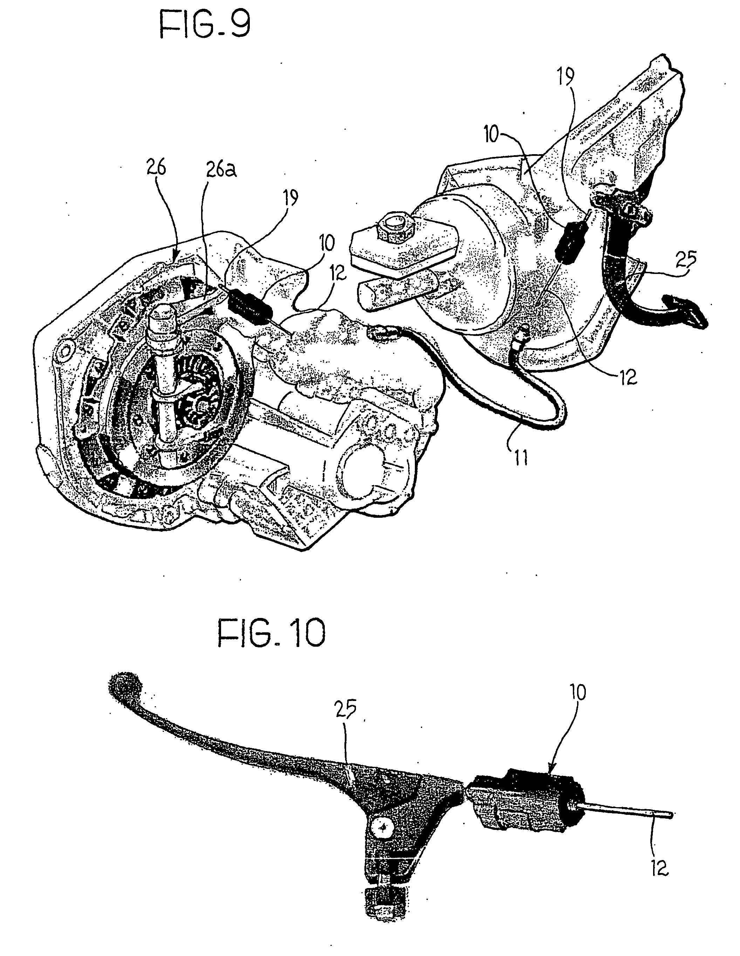

A second preferred embodiment of the present invention provides for the automatic adjustment device 10 to be mounted directly on the flexible cable 12, advantageously in the vicinity of the pedal 25 (position I of Figure 9) or in the vicinity of the clutch unit 26 (position II of Figure 9). The operation of the device according to this further embodiment is similar to that described above, with the difference that, in this case, the adjustment is performed by varying the length of the flexible cable 12 instead of the sheath 11.

With reference now to Figure 8, in which parts and elements identical or corresponding to those illustrated in Figures 5 to 7 have been attributed the same reference numerals, the automatic adjustment device 10 comprises an essentially cylindrical outer casing 13 to one end of which is fixed an abutment element 15 having a through-hole 16 through which an end portion 12a of the flexible cable 12 is introduced.

A head element 23' clamped onto the end portion 12a of the cable is movable axially in a cylindrical cavity 18 of the casing 13. A compression spring 24 is interposed axially between the abutment element 15 and the head element 23', the stiffness of the spring 24 being set so as to keep the flexible transmission in equilibrium with a preloading force of given value on the clutch disk.

Any variations in the tensile force in the flexible cable 12 due to settling or wear bring about a deformation of the spring 24 and hence a movement of the head element 23'. This movement is detected by one or more position sensors 34 which send a corresponding signal to an electronic control unit 33, which is arranged to operate an actuator 30 in dependence on the signals received from the sensors 34. The actuator 30, which comprises substantially an electric motor 31 and a geared reduction unit 32, is arranged to set in rotation a nut screw 20 of a male-and-female screw system. The rotation of the nut screw 20 causes a screw 19 to move axially in one of the two directions (according to the direction of rotation), the screw 19 passing through an opening 14 formed in the face of the casing 13 axially opposite that having the opening 16, and being connected, directly or indirectly, to an operating lever 26a of the clutch 26, or to the pedal 25, if the device 10 is mounted in the vicinity of the clutch, or of the pedal, respectively. The axial movement of the screw 19 which varies the relative distance between the screw and the end 12a of the flexible cable 12, is brought about by the control unit 33 by means of the actuator 30 in dependence on the signals transmitted by the sensors 34, with the objective of keeping the spring 24 in the original conditions of equilibrium (which can ensure the given value of the preloading force on the clutch disk), compensating for the lengthening or shortening of the spring caused by settling of the flexible transmission or by wear of the clutch disk, respectively.

In both of the above-described embodiments, the automatic adjustment device 10 is provided with electrical connection means (not shown) for the power supply of the electronic control unit 33 and of the electric motor 31.

The electronic control unit 33 also comprises memory means for storing all of the data useful for the correct operation of the device, such as, for example, the limit values of the movement of the spring 24 in the two directions, beyond which the control unit inhibits the operation of the device.

Precisely by virtue of the presence of the above-mentioned memory means, according to a further aspect of the invention, the automatic device 10 can advantageously store all of the adjustments performed in the wear-compensation direction in order to be able to provide the driver (for example, by means of a suitable warning light on the dashboard) with an indication of the state of wear of the clutch disk, usable for the purposes of preventive maintenance of the vehicle.

The method of fitting the automatic adjustment device 10 and its operation during normal use of the vehicle will now be described. In the following description, reference will be made, in particular, to the second embodiment defined above (mounting on the flexible cable), being understood that everything that is said can of course also be transferred, by analogy, to the first embodiment (mounting on the sheath).

First of all, the automatic adjustment device 10 is mounted in the flexible transmission for operating the clutch unit 26, in one of the two positions I, II described above (Figure 9), with the compensation screw 19 in the most extended position, and then it is connected to the electrical system of the vehicle with the ignition key in the "off" position. Movement of the key to the "on" position starts a first automatic adjustment step during which the device puts the flexible cable 12 under tension with a predetermined force (for example, 35 N) in order to compensate for the play present in the flexible transmission. After a certain number of operations of the pedal 25, the ignition key is returned to the "off" position. fter a minimum period of time (for example, 1s) has elapsed, with the pedal in the released condition, the device then performs a second automatic adjustment step, reestablishing the condition in which the cable 12 is preloaded with a predetermined tensile force (for example, 35N).

During normal use of the vehicle, the automatic device 10 performs the adjustment of the travel to compensate for the effect of settling and wear solely when the ignition key is in the "off" position and when the clutch pedal is in the released position. When a predetermined period of time (for example, 3s) has elapsed after the engine has been switched off, the electronic control unit 33 receives, as an input, the position signal coming from the sensor 34 and compares its instantaneous value with the predetermined reference value. In dependence on the difference between these two values (error), the control unit 33 determines the magnitude and direction of the axial movement to be imparted to the screw 19 in order to compensate for this error, returning the system to predetermined equilibrium conditions, and sends a corresponding control signal to the electric motor 31. Upon completion of the adjustment step, the adjustment device returns to the "stand-by" condition.

If the clutch pedal is depressed, the automatic adjustment device remains inactive; the device performs the adjustment only when a certain period of time (for example, 3s) has elapsed after the pedal has been released, and then returns to the "stand-by" condition.

During the adjustment, events such as starting of the engine or the application of a pressure to the clutch pedal inhibit the operation of the device which immediately goes into the "stand-by" condition. In this condition, the device keeps the compensation screw 19 locked in the position reached upon completion of the adjustment step, thus behaving as a rigid component within the transmission for operating the clutch unit.

The exertion of a pressure on the clutch pedal can be detected by the control unit 33 of the device substantially in two ways. The first way relates to the situation in which the pressure on the pedal is great enough to produce a tensile force in the flexible cable 12 such as to compress the spring 24 by more than the limit value beyond which the operation of the adjustment device is inhibited. The second way, on the other hand, enables the pressure on the pedal to be detected, even when it is so small as to bring about a compression of the spring within the adjustment limit. The device is in fact advantageously arranged, according to the invention, to perform a series of readings of the position of the spring, within the period of time between the switching-off of the engine and the start of the adjustment. If this position is not constant but is variable over time, whilst remaining below the adjustment limit value, then the control unit recognizes that it is not settling or wear that has taken place but that a pressure is being applied to the pedal (for example, owing to the fact that, having switched off the engine, the driver has remained in the vehicle in the driving position and, perhaps without noticing, still has his foot on the clutch pedal), and consequently prevents the adjustment.

According to a further advantageous characteristic of the invention, each time it is necessary to demount the flexible cable from the unit to be operated, for maintenance purposes, the compensation screw 19 can be moved to the most extended position by sending a specific command to the device. This command can be imparted by serial connection to an external electronic control unit or by a predetermined procedure comprising, for example, the steps of disconnection and subsequent connection of the power supply and the execution of a certain number of operating cycles of the remote-control member.

The use of an automatic adjustment device according to the invention in the flexible-cable control system of a motorcycle clutch is illustrated schematically in Figure 10, in which parts and elements identical or corresponding to those shown in Figures 5 to 9 have been attributed the same reference numerals. In this case, the remote-control member is represented by a lever 25 disposed on the handlebar of the motorcycle (not shown) and the automatic adjustment device 10 is fitted directly on the flexible cable 12, in the vicinity of the lever 25.

As will be clear to a person skilled in the art, the operation of the automatic adjustment device is just the same as that described with reference to its use in the system for operating a motorcar clutch.

The advantages offered by the automatic adjustment device of the present invention will be clear in the light of the foregoing description; these advantages are, for example:
- small size and ease of operation,
- low cost, by virtue of the use of a minimal number of sensors (possibly even, a single position sensor),
- extreme versatility of use,
- short assembly times, and
- elimination of the need to perform any type of manual adjustment, either on the assembly line or during the life of the vehicle.

Naturally, the principle of the invention remaining the same, embodiments and details of construction may be varied widely with respect to those described and illustrated purely by way of non-limiting example.

## Claims

1. An automatic device (10) for adjusting travel and taking up play and wear for a transmission with a flexible cable (12) and a sheath (11) for transmitting, to a unit (26) of a motor vehicle such as a clutch or a brake unit, the controls imparted by the driver of the vehicle by means of a remote-control member (25), the device being **characterized in that** it comprises:
resilient means (24) connected, directly or indirectly, to an end portion (11a) of the sheath (11) and arranged to deform as a result of variations in the length of the sheath (11) and/or in the tensile force in the flexible cable (12) resulting from settling of the transmission and/or from wear in the unit (26) to be operated, respectively,
sensor means (34) for detecting the deformation of the said resilient means (24) and for making available a signal indicative of the deformation,
processing means (33) for receiving and processing the deformation signal in order to generate a control signal,
actuator means (30) for receiving the control signal and for moving a movable element (19) to which the end portion (11a) of the sheath (11) is fixed, so as to compensate for the effect of settling and/or wear by adjusting the length of the transmission and controlling the value of the tensile force in the cable (12).

2. An automatic device (10) for adjusting travel and taking up play and wear for a transmission with a flexible cable (12) for transmitting, to a unit (26) of a motor vehicle, such as a clutch or a brake unit, the controls imparted by the driver of the vehicle by means of a remote-control member (25), the device being **characterized in that** it comprises:
resilient means (24) connected, directly or indirectly, to an end portion (12a) of the flexible cable (12) and arranged to deform as a result of a variation in the tensile force in the cable (12) resulting from settling of the transmission system and/or from wear in the unit (26) to be operated,
sensor means (34) for detecting the deformation of the resilient means (24) and for making available a signal indicative of the deformation,
processing means (33) for receiving and processing the deformation signal in order to generate a control signal,
actuator means (30) for receiving the control signal and for moving a movable element (19) interposed between at least one portion of the flexible cable (12) and the remote-control member (25) or the unit to be operated (26), so as to compensate for the effect of settling and/or wear by adjusting the length of the transmission and controlling the value of the tensile force in the cable (12).

3. A device according to Claim 1 or 2, **characterized in that** the processing means (33) are arranged to control the actuator means (30) in a manner such as to keep the tensile force in the flexible cable (12) at a constant and predetermined value, in order to ensure a constant and predetermined preloading force on the unit (26) to be operated.

4. A device according to any one of the preceding claims, **characterized in that** it comprises a casing (13) inside which the resilient means (24), the sensor means (34), the processing means (33), and the actuator means (30) are housed.

5. A device according to Claim 4, when it is dependent on Claim 1, **characterized in that** the casing (13) has a first opening (16) through which the flexible cable (12) is introduced, and a second opening (14) through which the cable (12) and the movable element (19), with the end portion (11a) of the sheath (11), protrude.

6. A device according to Claim 4, when it is dependent on Claim 2, **characterized in that** the casing (13) has a first opening (16) through which the end portion (12a) of the flexible cable (12) is introduced, and a second opening (14) through which the movable element (19) protrudes.

7. A device according to Claim 5 or 6, **characterized in that** the first and second openings (16, 14) are coaxial with one another.

8. A device according to Claim 2, **characterized in that** it can be mounted in a first position (I) in the vicinity of the remote-control member (25), with an orientation such that the movable element (19) is connectable, directly or indirectly, to the control member (25).

9. A device according to Claim 2, **characterized** that it can be mounted in a second position (II), in the vicinity of the unit to be operated (26), with an orientation such that the movable element (19) is connectable, directly or indirectly, to an operating lever (26a) of the unit (26).

10. A device according to any one of the preceding claims, **characterized in that** the movable element (19) is threaded.

11. A device according to Claim 10, **characterized in that** the movable element (19) is a screw movable axially by means of a nut screw (20) which can be rotated, directly or indirectly, by the actuator means (30).

12. A device according to Claim 11, **characterized in that** the screw (19) is tubular with a coaxial through-hole through which the flexible cable (12) extends.

13. A device according to Claim 1 or 2, **characterized in that** the resilient means comprise a compression spring (24) rests in a position substantially coaxial with the flexible cable (12).

14. A device according to Claims 4 and 13, when they are dependent on Claim 1, **characterized in that** the compression spring (24) rests, at one end, against an abutment element (15) fixed to the casing (13) and, at the axially opposite end, is connected indirectly to the end portion (11a) of the sheath (11).

15. A device according to Claims 4 and 13, when they are dependent on Claim 2, **characterized in that** the compression spring (24) rests, at one end, against an abutment element (15) fixed to the casing (13) and, at the axially opposite end, is connected to the end portion (12a) of the flexible cable (12).

16. A device according to Claim 14, **characterized in that** the abutment element (15) is mounted on a fixed portion of the vehicle.

17. A device according to Claim 14, **characterized in that** the abutment element (15) is connected to an end of a sheath portion (11) other than that on which the compression spring (24) acts.

18. A device according to any one of the preceding claims, **characterized in that** the processing means (33) are arranged to perform the automatic adjustment of the flexible transmission for operating the unit (26) both during the stage of mounting on the vehicle, and during the normal use of the vehicle.

19. A device according to any one of the preceding claims, **characterized in that** the processing means (33) are arranged to move the movable element (19) to an extension limit position in order to facilitate demounting of the flexible cable (12) in the event of maintenance operations being performed on the unit (26).

20. A device according to any one of the preceding claims, **characterized in that** the processing means (33) are arranged to perform the automatic adjustment, during the normal use of the vehicle, by means of the following steps:
when a predetermined period of time (for example, 3s) has elapsed after the ignition key has been switched to the "off" position, with the remote-control member (25) in the release position, the processing means (33) of the device (10) activate the actuator means (30) for a short period of time (for example, 1s) so as to compensate for the effect of settling and/or wear, ensuring a predetermined value of the tensile force in the flexible cable (12), and
the device (10) returns to the stand-by condition in which the movable element (19) is kept locked in the position reached upon completion of the adjustment step.

21. A device according to any one of the preceding claims, **characterized in that**, if the ignition key of the vehicle is switched to the on" position and/or the remote-control member (25) is operated, the processing means (33) are arranged to prevent the operation of the device (10).

22. A device according to any one of the preceding claims, **characterized in that** the processing means (33) are arranged to perform the adjustment only if the deformation of the resilient means (24) is within predefined limits, the exceeding of which limits is indicative of the operation of the remote-control member (25).

23. A device according to Claim 22, **characterized in that** it also comprises memory means for storing the predefined limit values of the deformation of the resilient means (24).

24. A device according to Claim 23, **characterized in that** the processing means (33) are arranged:
to acquire data indicative of the deformation of the resilient means (24), by means of the sensor means (34), at various moments within the period of time between the switching of the ignition key to the "off" position and the start of the adjustment step,
to store the deformation data thus acquired in the memory means,
to compare each deformation datum with the deformation datum acquired at the immediately preceding moment, and
to prevent the adjustment when the difference between the above-mentioned two deformation data is greater than a predetermined error threshold.

25. A device according to Claim 23, particularly for use in a flexible-cable transmission for operating a clutch (26), **characterized in that** the processing means (33) are arranged to store the magnitudes of the adjustments performed in the wear-compensation direction so as to be able to provide the driver or an operator assigned to the maintenance of the vehicle with an updated indication on the state of wear of the clutch disk (26).

26. A method of adjusting travel in a transmission with a flexible cable (12) for transmitting, to a unit (26) of a motor vehicle such as a clutch or a brake unit, the controls imparted by the driver of the vehicle by means of a remote-control member. (25), the adjustment being performed by means of an automatic device (10) according to any one of the preceding claims, the method being **characterized in that** it comprises the steps of:
mounting the device (10), with the movable element (19) at its maximum extension, in an intermediate position of the transmission between the remote-control member (25) and the unit to be operated (26),
connecting the device (10) to the electrical system of the vehicle with the ignition key not inserted,
performing, by means of the device (10), after the ignition key of the vehicle has been inserted and switched to the "on" position, a first automatic adjustment step by virtue of which the flexible cable (12) is put under tension with a force of predetermined value so as to compensate for the play present in the transmission,
returning the ignition key to the "off" position after a certain number of operations of the remote-control member (25), and
performing, by means of the device (10), a second automatic adjustment step, when a minimum period of time (for example, 1s) has elapsed with the remote-control member (25) released, in order to put the flexible cable (12) under tension again with the predetermined force value.

## Patentansprüche

1. Automatische Vorrichtung (10) zum Einstellen des Hubs sowie für die Aufnahme von einem Spiel und von einem Verschleiß bei einer Kraftübertragung mit einem flexiblen Kabel (12) und einer Hülle (11), um zu einer Einheit (26) eines Kraftfahrzeugs, beispielsweise zu einer Kupplungs- oder Bremseinheit, jene Steuerungen zu übertragen, die der Lenker des Fahrzeugs mit Hilfe eines Fernsteuerelements (25) ausführt, wobei die Vorrichtung **dadurch gekennzeichnet ist, dass** sie enthält:
eine elastische Einrichtung (24), die direkt oder indirekt mit einem Endteil (11a) der Hülle (11) verbunden und so angeordnet ist, dass sie als Ergebnis von Änderungen in der Länge der Hülle (11) und/oder in der Zugkraft im flexiblen Kabel (12) verformt wird, die von einem Nachlassen der Kraftübertragung und/oder von einem Verschleiß der Einheit (26) stammen, die betätigt werden soll,
eine Sensoreinrichtung (34), um die Verformung der elastischen Einrichtung (24) abzutasten und ein Signal bereit zu stellen, das die Verformung anzeigt,
eine Prozessoreinrichtung (33), um das Verformungssignal zu empfangen und zu verarbeiten, um ein Steuersignal zu erzeugen,
eine Stelleinrichtung (30), um das Steuersignal zu empfangen und ein bewegbares Element (19) zu bewegen, an dem der Endteil (11a) der Hülle (11) befestigt ist, um die Auswirkung von einem Nachlassen und/oder von einem Verschleiß durch das Einstellen der Länge der Kraftübertragung zu kompensieren und die Größe der Zugkraft im Kabel (12) zu steuern.

2. Automatische Vorrichtung (10) zum Einstellen des Hubs sowie für die Aufnahme von einem Spiel und von einem Verschleiß bei einer Kraftübertragung mit einem flexiblen Kabel (12), um zu einer Einheit (26) eines Kraftfahrzeugs, beispielsweise zu einer Kupplungs- oder Bremseinheit, jene Steuerungen zu übertragen, die der Lenker des Fahrzeugs mit Hilfe eines Fernsteuerelements (25) ausführt, wobei die Vorrichtung **dadurch gekennzeichnet ist, dass** sie enthält:
eine elastische Einrichtung (24), die direkt oder indirekt mit einem Endteil (12a) des flexiblen Kabels (12) verbunden und so angeordnet ist, dass sie als Ergebnis von einer Änderung in der Zugkraft im Kabel (12) verformt wird, die von einem Nachlassen des Kraftübertragungssystems und/oder von einem Verschleiß in der Einheit (26) stammt, die betätigt werden soll,
eine Sensoreinrichtung (34), um die Verformung der elastischen Einrichtung (24) abzutasten und ein Signal bereit zu stellen, das die Verformung anzeigt,
eine Prozessoreinrichtung (33), um das Verformungssignal zu empfangen und zu verarbeiten, um ein Steuersignal zu erzeugen,
eine Stelleinrichtung (30), um das Steuersignal zu empfangen und ein bewegbares Element (19) zu bewegen, das zwischen zumindest einem Teil des flexiblen Kabels (12) und dem Fernsteuerelement (25) oder der Einheit (26) liegt, die betätigt werden soll, um die Auswirkung von einem Nachlassen und/oder von einem Verschleiß durch das Einstellen der Länge der Kraftübertragung zu kompensieren und die Größe der Zugkraft im Kabel (12) zu steuern.

3. Vorrichtung gemäß Anspruch 1 oder 2, **dadurch gekennzeichnet, dass** die Prozessoreinrichtung (33) so aufgebaut ist, dass sie die Stelleinrichtung (30) so steuert, dass die Zugkraft im flexiblen Kabel (12) auf einem konstanten und vorgegebenen Wert gehalten wird, um eine konstante und vorgegebene Vorspannungskraft auf die Einheit (26) sicher zu stellen, die betätigt werden soll.

4. vorrichtung gemäß irgendeinem der bisherigen Ansprüche, **dadurch gekennzeichnet, dass** die Vorrichtung ein Gehäuse (13) enthält, in dem die elastische Einrichtung (24), die Sensoreinrichtung (34), die Prozessoreinrichtung (33) und die Stelleinrichtung (30) untergebracht sind.

5. Vorrichtung gemäß Anspruch 4, wenn dieser vom Anspruch 1 abhängt, **dadurch gekennzeichnet, dass** das Gehäuse (13) eine erste Öffnung (16), durch die das flexible Kabel (12) eingeführt wird, sowie eine zweite Öffnung (14) besitzt, durch die das Kabel (12) und das bewegbare Element (19) mit dem Endteil (11a) der Hülle (11) vorspringen.

6. Vorrichtung gemäß Anspruch 4, wenn dieser vom Anspruch 2 abhängt, **dadurch gekennzeichnet, dass** das Gehäuse (13) eine erste Öffnung (16), durch die der Endteil (12a) des flexiblen Kabels (12) eingeführt wird, sowie eine zweite Öffnung (14) besitzt, durch die das bewegbare Element (19) vorspringt.

7. Vorrichtung gemäß Anspruch 5 oder 6, **dadurch gekennzeichnet, dass** die erste und die zweite Öffnung (16, 14) koaxial zueinander liegen.

8. Vorrichtung gemäß Anspruch 2, **dadurch gekennzeichnet, dass** die Vorrichtung an einer ersten Stelle (I) in der Nähe des Fernsteuerelements (25) befestigt werden kann, wobei sie so ausgerichtet ist, dass das bewegbare Element (19) direkt oder indirekt mit dem Steuerelement (25) verbunden werden kann.

9. Vorrichtung gemäß Anspruch 2, **dadurch gekennzeichnet, dass** die Vorrichtung an einer zweiten Stelle (II) in der Nähe jener Einheit (26) befestigt werden kann, die betätigt werden soll, wobei sie so ausgerichtet ist, dass das bewegbare Element (19) direkt oder indirekt mit einem Betätigungshebel (26a) der Einheit (26) verbunden werden kann.

10. Vorrichtung gemäß irgendeinem der bisherigen Ansprüche, **dadurch gekennzeichnet, dass** das bewegbare Element (19) mit einem Gewinde versehen ist.

11. Vorrichtung gemäß Anspruch 10, **dadurch gekennzeichnet, dass** das bewegbare Element (19) eine Schnecke ist, die axial mit Hilfe einer Mutter (20) bewegt werden kann, die von der Stelleinrichtung (30) direkt oder indirekt in Drehung versetzt werden kann.

12. Vorrichtung gemäß Anspruch 11, **dadurch gekennzeichnet, dass** die Schnecke (19) rohrförmig mit einer koaxialen Durchgangsöffnung ausgebildet ist, durch die das flexible Kabel (12) verläuft.

13. Vorrichtung gemäß Anspruch 1 oder 2, **dadurch gekennzeichnet, dass** die elastische Einrichtung eine Druckfeder. (24) enthält, die in einer Stellung im Wesentlichen koaxial zum flexiblen Kabel (12) liegt.

14. Vorrichtung gemäß Anspruch 4 und 13, wenn diese vom Anspruch 1 abhängen, **dadurch gekennzeichnet, dass** die Druckfeder (24) an einem Ende auf einem Auflagerelement (15) aufliegt, das am Gehäuse (13) befestigt ist, und am axial gegenüber liegenden Ende indirekt mit dem Endteil (11a) der Hülle (11) verbunden ist.

15. Vorrichtung gemäß Anspruch 4 und 13, wenn diese vom Anspruch 2 abhängen, **dadurch gekennzeichnet, dass** die Druckfeder (24) an einem Ende auf einem Auflagerelement (15) aufliegt, das am Gehäuse (13) befestigt ist, und am axial gegenüber liegenden Ende mit dem Endteil (12a) des flexiblen Kabels (12) verbunden ist.

16. Vorrichtung gemäß Anspruch 14, **dadurch gekennzeichnet, dass** das Auflagerelement (15) an einem ortsfesten Teil des Fahrzeugs angebracht ist.

17. Vorrichtung gemäß Anspruch 14, **dadurch gekennzeichnet, dass** das Auflagerelement (15) mit einem Ende eines Hüllenteils (11) verbunden ist, auf den nicht die Druckfeder (24) wirkt.

18. Vorrichtung gemäß irgendeinem der bisherigen Ansprüche, **dadurch gekennzeichnet, dass** die Prozessoreinrichtung (33) so aufgebaut ist, dass sie eine automatische Einstellung der flexiblen Kraftübertragung für die Betätigung der Einheit (26) sowohl während der Befestigung am Fahrzeug, als auch während der normalen Verwendung des Fahrzeugs vornimmt.

19. Vorrichtung gemäß irgendeinem der bisherigen Ansprüche, **dadurch gekennzeichnet, dass** die Prozessoreinrichtung (33) so aufgebaut ist, dass sie das bewegbare Element (19) in eine Grenzstellung der Auslenkung bewegt, um die Demontage des flexiblen Kabels (12) im Falle von Wartungsvorgängen zu erleichtern, die an der Einheit (26) ausgeführt werden.

20. Vorrichtung gemäß irgendeinem der bisherigen Ansprüche, **dadurch gekennzeichnet, dass** die Prozessoreinrichtung (33) so aufgebaut ist, dass sie die automatische Einstellung während der normalen Verwendung des Fahrzeugs mit folgenden Schritten vornimmt:
wenn ein vorgegebenes Zeitintervall (beispielsweise 3 Sekunden) vergangen ist, nachdem der Zündschlüssel in die Stellung "AUS" geschaltet wurde, wobei sich das Fernsteuerelement (25) in der freigegebenen Stellung befindet, setzt die Prozessoreinrichtung (33) der Vorrichtung (10) die Stelleinrichtung (30) für ein kurzes Zeitintervall (beispielsweise 1 Sekunde) in Betrieb, um die Auswirkung von einem Nachlassen und/oder von einem Verschleiß zu kompensieren, wodurch ein vorgegebener Wert der Zugkraft im flexiblen Kabel (12) sicher gestellt wird, und
die Vorrichtung (10) kehrt in den Bereitschaftszustand zurück, in dem das bewegbare Element (19) in jener Stellung verriegelt gehalten wird, die bei einem Abschluss des Einstellschritts erreicht wurde.

21. Vorrichtung gemäß irgendeinem der bisherigen Ansprüche, **dadurch gekennzeichnet, dass** dann, wenn der Zündschlüssel des Fahrzeugs in die Stellung "EIN" geschaltet und/oder das Fernsteuerelement (25) betätigt wird, die Prozessoreinrichtung (33) so aufgebaut ist, dass ein Betrieb der Vorrichtung (10) verhindert wird.

22. Vorrichtung gemäß irgendeinem der bisherigen Ansprüche, **dadurch gekennzeichnet, dass** die Prozessoreinrichtung (33) so aufgebaut ist, dass sie die Einstellung nur dann ausführt, wenn die Verformung der elastischen Einrichtung (24) innerhalb von vorgegebenen Grenzen liegt, wobei ein Überschreiten dieser Grenzen die Betätigung des Fernsteuerelements (25) anzeigt.

23. Vorrichtung gemäß Anspruch 22, **dadurch gekennzeichnet, dass** die Vorrichtung weiters eine Speichereinrichtung enthält, um die vorgegebenen Grenzwerte der Verformung der elastischen Einrichtung (24) zu speichern.

24. Vorrichtung gemäß Anspruch 23, **dadurch gekennzeichnet, dass** die Prozessoreinrichtung (33) so aufgebaut ist, dass:
Daten, die die Verformung der elastischen Einrichtung (24) anzeigen, mit der Sensoreinrichtung (34) zu verschiedenen Zeitpunkten innerhalb des Zeitintervalls zwischen dem Schalten des Zündschlüssels in die Stellung "AUS" und dem Beginn des Einstellschritts erfasst werden,
Daten der Verformung, die auf diese Weise erfasst werden, in der Speichereinrichtung gespeichert werden,
jeder Datenwert der Verformung mit dem Datenwert der Verformung verglichen wird, der zum Zeitpunkt unmittelbar vorher erfasst wurde, und
die Einstellung verhindert wird, wenn der Unterschied zwischen den oben erwähnten beiden Datenwerten der Verformung größer als ein vorgegebener Fehlerschwellenwert ist.

25. Vorrichtung gemäß Anspruch 23, im Besonderen für eine Verwendung in einer Kraftübertragung mit einem flexiblen Kabel zur Betätigung einer Kupplung (26), **dadurch gekennzeichnet, dass** die Prozessoreinrichtung (33) so aufgebaut ist, um die Größen der Einstellungen zu speichern, die in Richtung einer Kompensation von einem Verschleiß ausgeführt werden, um dem Lenker oder einer Bedienungsperson, die eine Wartung des Fahrzeugs durchführen soll, eine Anzeige über den letzten Stand des Verschleißes der Kupplungsscheibe (26) zu liefern.

26. Verfahren zum Einstellen des Hubs in einer Kraftübertragung mit einem flexiblen Kabel (12), um zu einer Einheit (26) eines Kraftfahrzeugs, beispielsweise einer Kupplungs- oder Bremseinheit, jene Steuerungen zu übertragen, die vom Lenker des Fahrzeugs mit Hilfe eines Fernsteuerelements (25) ausgeführt werden, wobei die Einstellung mit einer automatischen Vorrichtung (10) gemäß irgendeinem der bisherigen Ansprüche vorgenommen wird, wobei das Verfahren **dadurch gekennzeichnet ist, dass** es folgende Schritte enthält:
Befestigen der Vorrichtung (10), wobei sich das bewegbare Element (19) in seiner maximalen Auslenkung befindet, an einer Zwischenstelle der Kraftübertragung zwischen dem Fernsteuerelement (25) und jener Einheit (26), die betätigt werden soll,
Verbinden der Vorrichtung (10) mit dem elektrischen System des Fahrzeugs, wobei der Zündschlüssel nicht eingesteckt ist,
Ausführen mit Hilfe der Vorrichtung (10), nachdem der Zündschlüssel des Fahrzeugs eingesteckt und in die Stellung "EIN" geschaltet wurde, eines ersten Einstellschritts, bei dem das flexible Kabel (12) mit einer Kraft, die einen vorgegebenen Wert besitzt, unter Zug gesetzt wird, um jenes Spiel zu kompensieren, das in der Kraftübertragung vorhanden ist,
Rückführen des Zündschlüssels in die Stellung "AUS", nachdem eine bestimmte Anzahl von Betätigungen des Fernsteuerelements (25) vorgenommen wurden, und
Ausführen mit Hilfe der Vorrichtung (10) eines zweiten automatischen Einstellschritts, wenn ein minimales Zeitintervall (beispielsweise 1 Sekunde) vergangen ist, wobei das Fernsteuerelement (25) freigegeben wurde, um das flexible Kabel (12) mit dem vorgegebenen Kraftwert wieder unter Zug zu setzen.

## Revendications

1. Un dispositif automatique (10) pour régler la course et rattraper le jeu et l'usure pour une transmission munie d'un câble flexible (12) et d'une gaine (11) pour transmettre, à une unité (26) d'un véhicule à moteur telle qu'une unité d'embrayage ou de frein, les commandes appliquées par le conducteur du véhicule au moyen d'un organe (25) de télécommande, le dispositif étant **caractérisé en ce qu'**il comprend :
- des moyens élastiques (24) reliés, directement ou indirectement, à une partie d'extrémité (11a) de la gaine (11) et agencés pour se déformer à la suite de variations de la longueur de la gaine (11) et/ou de la force de traction dans le câble flexible (12) provoquées respectivement par le réglage de la transmission et/ou par l'usure dans l'unité (26) à actionner,
- des moyens capteurs (34) pour détecter la déformation desdits moyens élastiques (24) et pour délivrer un signal indicatif de la déformation,
- des moyens de traitement (33) pour recevoir et traiter le signal de déformation afin de générer un signal de commande,
- des moyens d'actionnement (30) pour recevoir le signal de commande et pour déplacer un élément mobile (19) auquel est fixée la partie d'extrémité (11a) de la gaine (11), de façon à compenser l'effet du réglage et/ou de l'usure en réglant la longueur de la transmission et en contrôlant la valeur de la force de traction dans le câble (12).

2. Un dispositif automatique (10) pour régler la course et rattraper le jeu et l'usure pour une transmission avec un câble flexible (12) pour transmettre, à une unité (26) d'un véhicule à moteur telle qu'une unité d'embrayage ou de frein, les commandes appliquées par le conducteur du véhicule au moyen d'un organe (25) de télécommande, le dispositif étant **caractérisé en ce qu'**il comprend :
- des moyens élastiques (24) reliés, directement ou indirectement, à une partie d'extrémité (12a) du câble flexible (12) et agencés pour se déformer à la suite d'une variation de la force de traction dans le câble (12), provoquée par le réglage du système de transmission et/ou par l'usure dans l'unité (26) à actionner,
- des moyens capteurs (34) pour détecter la déformation des moyens élastiques (24) et pour délivrer un signal indicatif de la déformation,
- des moyens de traitement (33) pour recevoir et traiter le signal de déformation afin de générer un signal de commande,
- des moyens d'actionnement (30) pour recevoir le signal de commande et pour déplacer un élément mobile (19) interposé entre au moins une partie du câble flexible (12) et l'organe (25) de télécommande ou l'unité à actionner (26), de façon à compenser l'effet du réglage et/ou de l'usure en réglant la longueur de la transmission et en contrôlant la valeur de la force de traction dans le câble (12).

3. Un dispositif selon la revendication 1 ou 2, **caractérisé en ce que** les moyens de traitement (33) sont agencés pour contrôler les moyens d'actionnement (30) de façon à maintenir la force de traction dans le câble flexible (12) à une valeur constante et prédéterminée, afin d'assurer une force de précharge constante et prédéterminée sur l'unité (26) à actionner.

4. Un dispositif selon l'une quelconque des revendications précédentes, **caractérisé en ce qu'**il comprend un boîtier (13) à l'intérieur duquel sont logés les moyens élastiques (24), les moyens capteurs (34), les moyens de traitement (33), et les moyens d'actionnement (30).

5. Un dispositif selon la revendication 4, lorsqu'elle dépend de la revendication 1, **caractérisé en ce que** le boîtier (13) comporte une première ouverture (16) à travers laquelle le câble flexible (12) est introduit, et une deuxième ouverture (14) à travers laquelle font saillie le câble (12) et l'élément mobile (19), avec la partie d'extrémité (11a) de la gaine (11).

6. Un dispositif selon la revendication 4, lorsqu'elle dépend de la revendication 2, **caractérisé en ce que** le boîtier (13) comporte une première ouverture (16) à travers laquelle la partie d'extrémité (12a) du câble flexible (12) est introduite, et une deuxième ouverture (14) à travers laquelle fait saillie l'élément mobile (19).

7. Un dispositif selon la revendication 5 ou 6, **caractérisé en ce que** les première et deuxième ouvertures (16, 14) sont coaxiales l'une à l'autre.

8. Un dispositif selon la revendication 2, **caractérisé en ce qu'**il peut être monté dans une première position (1) à proximité de l'organe (25) de télécommande, avec une orientation telle que l'élément mobile (19) soit susceptible d'être relié, directement ou indirectement, à l'organe de commande (25).

9. Un dispositif selon la revendication 2, **caractérisé en ce qu'**il peut être monté dans une deuxième position (II), à proximité de l'unité à actionner (26), avec une orientation telle que l'élément mobile (19) soit susceptible d'être relié, directement ou indirectement, à un levier d'actionnement (26a) de l'unité (26).

10. Un dispositif selon l'une quelconque des revendications précédentes, **caractérisé en ce que** l'élément mobile (19) est fileté.

11. Un dispositif selon la revendication 10, **caractérisé en ce que** l'élément mobile (19) est une vis axialement mobile par l'intermédiaire d'un écrou fileté (20) qui peut être entraîné en rotation, directement ou indirectement, par les moyens d'actionnement (30).

12. Un dispositif selon la revendication 11, **caractérisé en ce que** la vis (19) est tubulaire avec un trou traversant coaxial à travers lequel s'étend le câble flexible (12).

13. Un dispositif selon la revendication 1 ou 2, **caractérisé en ce que** les moyens élastiques comprennent un ressort de compression (24) disposé dans une position sensiblement coaxiale au câble flexible (12).

14. Un dispositif selon les revendications 4 et 13, lorsqu'elles dépendent de la revendication 1, **caractérisé en ce que** le ressort de compression (24) s'appuie, à une extrémité, contre un élément de butée (15) fixé au boîtier (13) et, à l'extrémité axialement opposée, est relié indirectement à la partie d'extrémité (11a) de la gaine (11).

15. Un dispositif selon les revendications 4 et 13, lorsqu'elles dépendent de la revendication 2, **caractérisé en ce que** le ressort de compression (24) est en appui, à une extrémité, contre un élément de butée (15) fixé au boîtier (13) et, à l'extrémité axialement opposée, est relié à la partie d'extrémité (12a) du câble flexible (12).

16. Un dispositif selon la revendication 14, **caractérisé en ce que** l'élément de butée (15) est monté sur une partie fixe du véhicule.

17. Un dispositif selon la revendication 14, **caractérisé en ce que** l'élément de butée (15) est relié à une extrémité d'une partie de gaine (11) autre que celle sur laquelle agit le ressort de compression (24).

18. Un dispositif selon l'une quelconque des revendications précédentes, **caractérisé en ce que** les moyens de traitement (33) sont agencés pour réaliser le réglage automatique de la transmission flexible pour actionner l'unité (26) à la fois pendant l'étape de montage sur le véhicule, et pendant l'utilisation normale du véhicule.

19. Un dispositif selon l'une quelconque des revendications précédentes, **caractérisé en ce que** les moyens de traitement (33) sont agencés pour déplacer l'élément mobile (19) à une position limite d'extension afin de faciliter le démontage du câble flexible (12) dans le cas où des opérations d'entretien sont réalisées sur l'unité (26).

20. Un dispositif selon l'une quelconque des revendications précédentes, **caractérisé en ce que** les moyens de traitement (33) sont agencés pour réaliser le réglage automatique, pendant l'utilisation normale du véhicule, au moyen des étapes suivantes :
- lorsqu'une période de temps prédéterminée (par exemple 3 secondes) s'est écoulée après que la clé d'allumage a été commutée sur la position «arrêt», avec l'organe (25) de télécommande dans la position inactivée, les moyens de traitement (33) du dispositif (10) activent les moyens d'actionnement (30) pendant une courte période de temps (par exemple 1 seconde) de façon à compenser l'effet du réglage et/ou de l'usure, en assurant une valeur prédéterminée de la force de traction dans le câble flexible (12), et
- le dispositif (10) revient à l'état d'attente active dans laquelle l'élément mobile (19) est maintenu verrouillé dans la position atteinte après réalisation de l'étape de réglage.

21. Un dispositif selon l'une quelconque des revendications précédentes, **caractérisé en ce que**, si la clé d'allumage du véhicule est commutée à la position « marche » et/ou si l'organe (25) de télécommande est actionné, les moyens de traitement (33) sont agencés pour empêcher le fonctionnement du dispositif (10).

22. Un dispositif selon l'une quelconque des revendications précédentes, **caractérisé en ce que** les moyens de traitement (33) sont agencés pour réaliser le réglage uniquement si la déformation des moyens élastiques (24) est dans les limites prédéfinies, le dépassement de ces limites étant indicatif du fonctionnement de l'organe (25) de télécommande.

23. Un dispositif selon la revendication 22, **caractérisé en ce qu'**il comprend également des moyens de mémoire pour stocker les valeurs limites prédéfinies de la déformation des moyens élastiques (24).

24. Un dispositif selon la revendication 23, **caractérisé en ce que** les moyens de traitement (33) sont agencés :
- pour acquérir des données indicatives de la déformation des moyens élastiques (24), par l'intermédiaire des moyens capteurs (34), à divers moments pendant la période de temps entre la commutation de la clé d'allumage sur la position « arrêt » et le début de l'étape de réglage,
- pour stocker les données de déformation ainsi acquises dans les moyens de mémoire,
- pour comparer chaque donnée de déformation avec la donnée de déformation acquise à l'instant immédiatement précédent, et
- pour empêcher le réglage lorsque la différence entre les deux données de déformation mentionnées ci-dessus est supérieure à un seuil d'erreur prédéterminé.

25. Un dispositif selon la revendication 23, destiné en particulier à être utilisé dans une transmission à câble flexible pour actionner un embrayage (26), **caractérisé en ce que** les moyens de traitement (33) sont agencés pour stocker les amplitudes des réglages réalisés dans la direction de la compensation de l'usure, de façon à pouvoir fournir à un conducteur ou à un opérateur affecté à l'entretien du véhicule, une indication à jour sur l'état de l'usure du disque d'embrayage (26).

26. Un procédé de réglage de course dans une transmission avec un câble flexible (12) pour transmettre, à une unité (26) d'un véhicule à moteur telle qu'une unité d'embrayage ou de frein, les commandes appliquées par le conducteur du véhicule au moyen d'un organe (25) de télécommande, le réglage étant réalisé au moyen d'un dispositif automatique (10) selon l'une quelconque des revendications précédentes, le procédé étant **caractérisé en ce qu'**il comprend les étapes consistant :
- à monter le dispositif (10), avec l'élément mobile (19) à son extension maximale, dans une position intermédiaire de la transmission entre l'organe (25) de télécommande et l'unité à actionner (26),
- à relier le dispositif (10) au système électrique du véhicule, la clé d'allumage n'étant pas insérée,
- à réaliser, au moyen du dispositif (10), après que la clé d'allumage du véhicule a été insérée et commutée sur la position « marche », une première étape de réglage automatique, à la suite de laquelle le câble flexible (12) est mis en traction avec une force de valeur prédéterminée, de façon à compenser le jeu existant dans la transmission,
- à rappeler la clé d'allumage à la position «arrêt» après un certain nombre d'actionnements de l'organe (25) de télécommande, et
- à réaliser, au moyen du dispositif (10), une deuxième étape de réglage automatique, lorsqu'une période de temps minimale (par exemple 1 seconde) s'est écoulée avec l'organe (25) de télécommande inactivé, afin de mettre en traction le câble flexible (12) à nouveau avec la valeur de force prédéterminée.
